# EUROPEAN PATENT APPLICATION

(11) **EP 1 602 342 A1**
(43) Date of publication of application: **07.12.2005**
(21) Application number: 04013279.7
(22) Date of filing: 04.06.2004
(51) Int. Cl.: A61C 5/06, A61C 9/00, B05C 17/005

(54) **Locking assembly and dispensing cartridge comprising the same**

(71) Applicant: 3M ESPE AG, 82229 Seefeld (DE)
(72) Inventor: Müller, Dirk, 80689 München (DE)

(57) **Abstract**

The present invention relates to a locking assembly for locking a mixer to a dispensing cartridge, and to a dispensing cartridge particularly for dental impression materials. The locking assembly (200) comprises a first movable member (210) and a second movable member (230) that are operationally connected with each other such that a movement of the first movable member in a first direction causes the second movable member to release a tip (130) from the dispensing cartridge, and a movement of the first movable member in a second direction causes the second movable member to engage the tip. Preferably, said first movable member, in its non-activated position, forms at least a part of a handle.

## Description

### BACKGROUND OF THE INVENTION

### TECHNICAL FIELD

The present invention relates to a dispensing cartridge, particularly for dental impression materials, of the type adapted to be releasably received in an applicator having a moveable plunger.

### DESCRIPTION OF THE RELATED ART

A number of dispensing devices are available for dispensing various types of materials. In many instances, the dispensing device is an assembly that includes a reusable dispenser or applicator and a disposable cartridge. The cartridge contains a quantity of a composition or material to be dispensed and is releasably received in a receptacle of the applicator.

In one type of dispensing devices, that include an applicator and a cartridge, the applicator has a plunger that is advanced by the user during a dispensing operation. Often, the plunger is received in an open end of the cartridge and bears against a piston within the cartridge. As the plunger is advanced to move the piston, the piston expels a quantity of material through a front outlet opening of the cartridge. The cartridge is typically made from a plastic material.

Dispensing devices with cartridges are often used in the field of dentistry for mixing and dispensing dental compositions of two components, such as impression materials, restoratives, adhesives, cements, etching gels, sealants and the like. The dispensing cartridge of such devices is made from a plastic material and comprises two compartments formed by two cylindrical bodies arranged in parallel to each other. Each compartment contains a specific component, usually a base paste or a catalyst paste. These two components are pressed from their respective compartments out into a mixing tip where the required dental material is prepared. The pressure further urges the mixture out of the mixing tip so that the dental professional can use it as desired.

One type of such dispensing devices is an assembly (e.g., the Garant™ dispenser available from 3M ESPE AG) that includes a reusable, hand-operated applicator and a disposable cartridge (e.g., the cartridge for the polyether impression material Permadyne™ Garant™ available from 3M ESPE AG). The two compartments are of the same cylindrical shape and size and are pre-filled with the two components to be mixed and dispensed.

Another type of such dispensing devices is an automatic dispensing system (e.g., Pentamix™ available from 3M ESPE AG) that includes a motor-driven mixing or applicator unit and reusable and interchangeable cartridges (e.g., the cartridge for the polyether impression material Impregum™ Penta™ H DuoSoft, or the cartridge for the polyether impression material Permadyne™ Penta™, or the cartridge for the vinyl polysiloxane impression material Express™ Penta™ H, all available from 3M ESPE AG). The two cylindrical compartments of the cartridge have different diameters, and, in use, each accommodates a disposable foil bag pre-filled with the respective component. The larger compartment accommodates the foil bag with the base paste. The smaller compartment accommodates the foil bag with the catalyst paste. The mixing or applicator unit comprises a chamber for holding the cartridge and two parallel motor-driven plungers designed to plunge into the respective compartments and to exert pressure on the components contained in the foil bags. Both foil bags comprise a respective cap that fits onto the rim of the respective cylindrical body of the dispensing cartridge. A pivotable lever is used for locking the mixing tip so that is does not fall off of the caps of the foil bags as soon pressure is applied by the plungers.

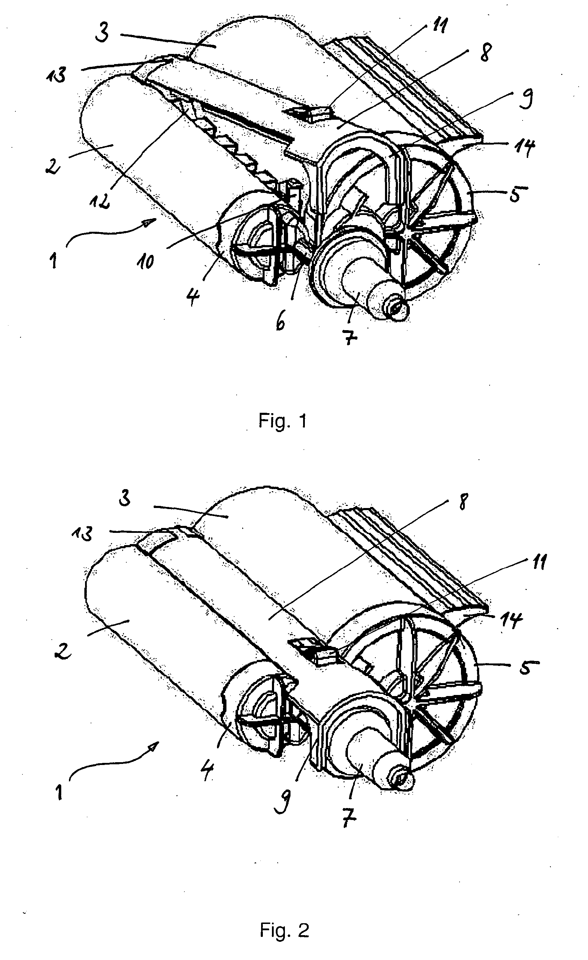

Fig. 1 shows such a conventional cartridge 1 having two parallel cylindrical compartments 2, 3 with different diameters. In Fig. 1, each compartment already accommodates a foil bag comprising respective caps 4, 5. Each cap comprises an outlet tube (in Fig. 1 the outlet tube 6 of cap 4 is clearly shown only), and connected to these outlet tubes is a mixing tip 7. A lever 8 that extends along the longitudinal axis of the cartridge is pivotally hinged to the cartridge at its rear end. At the front end of the lever 8, the lever comprises an essentially U-shaped locking member 9, the locking member comprising two locking arms that engage corresponding locking surfaces or flanges at the mixing tip 7 when the lever is in line with the longitudinal axis of the cartridge.

Fig. 2 shows the cartridge 1 with the lever 8 in its fully engaged position. Due to the two locking arms engaging a circumferential flange at the rear end of the mixing tip 7, the mixing tip 7 is held tight against the outlet tubes 6 of the foil bag caps 4, 5. In order to releasably keep the lever 8 in its engaged state, an engagement mechanism 10 is provided between said compartments 2, 3, which engages a corresponding surface at the underside of the lever 8. This engagement mechanism 10 can be released by means of a release slide 11. In order to facilitate a quick release of the lever 8 from mixing tip 7, a leaf spring 12 is provided adjacent to the lever hinge 13. Once the engagement mechanism 10 is released with the release slide 11, lever 8 springs upwards and away from the mixing tip 7 due to the bias force of the leaf spring 12.

Figs. 1 and 2 also show a handle 14 that is provided at one side of the cartridge, specifically on the side of the larger diameter compartment 3. With this handle 14, the cartridge 1 can be picked up and removed from the applicator unit, for example, so that the foil bags can easily be changed.

Since the lever 8 is substantially long, the front end of the lever 8 with its U-shaped locking member moves on a circle having a rather large radius.

Thus, the lever 8 of the conventional cartridge requires much space when replacing the mixing tip 7 or the foil bags.

The lever 8 also cannot be locked with a single hand when the cartridge is outside of the applicator unit. The user always needs both of his hands: one hand for holding the cartridge, the other hand for releasing and rotating the lever. This may be uncomfortable.

Moreover, the lever 8 is rather long compared to its width. For this reason, only a small hinge 13 can be used. This, however, increases the risk that the hinge is damaged or that the lever 8 even breaks at the hinge owing to the long lever arm of the force applied by the user at the front end of the lever 8.

Finally, disengagement of the lever 8 from the mixing tip 7 not only releases the mixing tip 7 but, at the same time, releases the foil bags.

Furthermore, since the handle 14 is provided at a side of the cartridge 1 like a wing, removal of the entire cartridge 1 from the mixing unit might be inconvenient to the user.

DE-U1-202 19 752 describes a device for dispensing a mixed multicomponent paste. In this document, a holding means for the mixing tip is described. The mixing tip comprises two opposite grooves at its outer surface. The grooves are provided in a plane being perpendicular to the longitudinal axis of the mixing tip. With these grooves, the mixing tip can be slidably engaged by corresponding L-shaped arms provided at the front end of the cartridge. In more detail, the mixing tip is slid along theses arms in a plane perpendicular to the longitudinal axis of the cartridge until the mixing tip contacts an abutment surface. The outlet of the foil bag caps are then in line with the inlet openings of the mixing tip. A pivotable lever is then used to move the tip along the longitudinal axis of the cartridge towards the foil bags, and to reach the engaged position of the mixing tip. In other words, the mixing tip is first moved sideward by the user in order to engage the L-shaped arms, and then moved longitudinally by means of the pivotable lever. The lever thus radially extends away from the cartridge.

Further reference is made to EP-A-0 291 753, EP-A-0 910 995, WO 97/18145, US-A- 5 184 757, DE-A-100 38 882, and DE-A-34 18 052.

### SUMMARY OF THE INVENTION

The present invention is directed in one aspect to a locking assembly for locking a tip to a dispensing cartridge, particularly for dental impression materials. The locking assembly comprises a first movable member comprising a first end and a second movable member comprising a first end and a second end. The second end of the second movable member is adapted for releasable locking engagement with a tip. Furthermore, the first movable member is operationally connected to the second movable member such that a movement of the first end of the first movable member is transmitted to the first end of the second movable member causing the second movable member to also move. Movement of the first end of the first movable member in a first direction causes the second end of the second movable member to release the tip, and movement of the first end of the first movable member in a second direction causes the second end of the second movable member to engage the tip.

Preferably, the locking assembly of the first aspect is removably attached to a dispensing cartridge.

According to a second aspect, the present invention provides a dispensing cartridge, particularly for dental impression materials. The dispensing cartridge comprises at least one compartment. Furthermore, there is provided a locking assembly for releasably locking a tip with at least one compartment. The locking assembly comprises a first movable member comprising a first end and a second movable member comprising a first end and a second end. The second end of the second movable member is adapted for releasable locking engagement with the tip. The first movable member is operationally connected to the second movable member such that a movement of the first end of the first movable member is transmitted to the first end of the second movable member causing the second movable member to also move. Movement of the first end of the first movable member in a first direction causes the second end of the second movable member to release the tip, and movement of the first end of the first movable member in a second direction causes the second end of the second movable member to engage the tip.

Preferably, the locking assembly is removably attachable to the dispensing cartridge.

The first movable member is preferably a first pivotable member and the second movable member is a preferably a second pivotable member.

Preferably, the first movable member is pivotably connected at its second end to the dispensing cartridge adjacent to the rear end thereof. The second end is opposite to the first end. In more detail, the first movable member preferably comprises a lever arm that, in the non-activated position of the locking assembly, extends substantially along, i.e. parallel to the longitudinal axis of the dispensing cartridge. Alternatively, the lever arm is curved towards or away from the dispensing cartridge. In this case, however, it is preferred that the first end and the second end of the curved lever arm lay on the same axis substantially parallel to the longitudinal axis if the cartridge. Preferably, the term "non-activated position" refers to the position of the locking assembly in which the tip is locked to the dispensing cartridge. Upon activation of the locking assembly for releasing the tip, the first movable member is moved with its first end about the pivotal connection of the second end. As will become clear from the following description, to activate the locking assembly, i.e. to release the tip, a small angular displacement relative to the longitudinal axis of the lever arm in its non-activated position is sufficient. Preferably, the angular displacement is less than 45°, more preferably less than 30°, and most preferably about 10°. Moreover, it is preferred that the first movable member is angularly displaced towards the dispensing cartridge for releasing the tip.

The second movable member is preferably pivotably connected at its first end to the dispensing cartridge adjacent to the front end thereof.

According to a preferred embodiment of the present invention, the operational connection between the two movable members is formed by a knee joint. For example, the operational connection is formed by a connecting member comprising a connecting rod hingedly connected to the first end of the first movable member and also hingedly connected to the first end of the second movable member. Preferably, in the non-activated condition, the hinged connections between the connecting rod and the first and second movable members are more distant from the longitudinal central tip axis than the pivot of the first end of the second movable member. Since the pivot of the first end of the second movable member is such offset from the other hinged connections, a knee joint is formed.

Alternatively, the connecting member is formed by a crank mechanism. For example, the second movable member comprises a slot at its first end for receiving a pin that is provided at the first end of the first movable member. Upon activation of the first movable member, the pin is moved along the slot thus causing the second movable member to rotate about a pivot that is offset from the axis of movement of the pin along the slot.

In cases where the connecting member comprises a crank mechanism or a knee joint, the locking assembly is self-locking. This means that an accidental movement of the second movable member is not transmitted to the first movable member, i.e., movement of the first movable member is transmittable to the second movable member but not vice versa.

Further alternatively, the operational connection is formed by a gearwheel mechanism. Thus, an angular displacement of the first end (front end) of the first movable member is transmitted into a pivotal or rotational, respectively, movement of the second movable member by suitable engaging gearwheels. Activation of the first movable member causes a release of the tip by the second movable member due to the engaging teeth of the gearwheels.

In order to provide a defined non-activated position of the locking assembly of the present invention, a bias function is provided for biasing the first movable member to its non-activated position. As mentioned above, the non-activated position is preferably the position in which the tip is locked onto the dispensing cartridge. Preferably, bias function is provided by a bias member, for example a coil spring or a leaf spring or an elastic part of the lever arm or cartridge. In a preferred embodiment, the bias member is located adjacent to the first end of the first movable member, and provides a bias force substantially perpendicular to the direction of movement of the first end of the first movable member. Pivotal movement of the first end of the first movable member against the bias force, e.g., the bias member causes the second end of the second movable member to release the tip, and pivotal movement of the first end of the first movable member with the bias member, i.e. owing to the bias member, causes the second end of the second movable member to engage the tip.

It is preferred according to the present invention that the second end of the second movable member comprises engagement surfaces that are engageable with a complementary engagement surface at the tip. More preferably, the second end of the second movable member is substantially U-shaped, and the two legs of the "U" are engageable with a corresponding annular flange at the rear end of the tip. The U-shaped second end of the second movable member is preferably arranged such that in the non-activated position of the locking assembly, the U-shaped second end of the second movable member is in a plane perpendicular to the longitudinal axis of the tip, thus engaging the rear end of the tip.

The second movable member is preferably substantially L-shaped so that the two legs of the L-shaped second movable member form the first and second ends, respectively. The first end interacts with the first movable member via the connecting member, and the second end locks the tip. Alternatively, the second movable member is quarter-circular shaped, or has a shape between L-shaped and quarter-circular shaped, i.e., like an "L", however with a rounded edge between the two legs of the "L". In general, the shape of the second movable member is such the an angular displacement of the first end caused by the first movable member sufficiently angularly displaces the second end of the second movable member to release or lock, respectively, the tip onto the at least one compartment.

Preferably, the at least one compartment is adapted for receiving a container. As an optional feature, the second movable member comprising at least one additional engagement element for engaging the cap of such a container. Such an additional engagement element is preferably arranged at the second movable member such that, upon activation of the locking assembly, the locking assembly first releases the tip in a first position of the second movable member, and upon further activation, the locking assembly (i.e., further angular displacement) also releases the cap of the container in a second position of the second movable member. Preferably, the locking assembly is adapted such that the tip is replaceable without disengagement or even removal of the containers from the cartridge.

In the present dispensing cartridge, the at least one compartment comprises a body having an open end for receiving a plunger of an applicator, and having an outlet opening. The at least one compartment extends between the open end and outlet opening.

As a further preferred feature of the present invention, the first movable member, in its non-activated position, forms at least a part of a handle. More preferably, the first movable member is spaced from at least one compartment such that it forms a handle. In other words, the lever arm of the first movable member preferably runs parallel to at least one compartment at a sufficient distance that allows a user to clasp the lever arm as a handle.

The dispensing cartridge of the present inventions preferably contains a first compartment (preferably adapted for receiving a first container) comprising a base material and a second compartment (preferably adapted for receiving a second container) comprising a catalyst material that together form a dental impression material after having been mixed. Preferably, the dental impression material is a polyether impression material or polysiloxane impression material. The containers are preferably foil bags closed by respective caps comprising outlet tubes.

The tip usable with a locking assembly according to the first aspect of the present invention or with a dispensing cartridge according to the second aspect of the present invention is preferably a dispensing tip or a mixing tip.

According to a third aspect, the present invention provides a kit comprising an applicator unit comprising at least one plunger and at least one dispensing cartridge according to the second aspect of the present invention. The present invention also provides a kit comprising a dispensing cartridge according to the second aspect of the present invention comprising a paste, and a tip.

According to the present invention, the locking assembly, i.e. the combination of locking assembly and handle, is such that it closes automatically when released and thus locks the tip onto the dispensing cartridge. In case a knee joint is used, for example, high forces are provided which compensate for friction or wear or provide a reliable sealing of the connections on the last millimetres of movement. For disengagement, the handle has to be pressed down at its front end so that it gives way. As described above, there are preferably two steps of release. First, the tip is released. With slightly additional pressure, the handle gives even more way to also release the container, i.e., the foil bag/cap. This results in a substantially easier handling of the dispensing cartridge.

The dispensing cartridge of the present invention is advantageous because the function of the handle is offered by the same components as the locking function. No additional handle is required for replacing the dispensing cartridges in the applicator unit. Moreover, in case the tip is not mounted properly, the second movable member with its engagement surfaces does not properly engage the complimentary engagement surfaces at the tip, which is immediately apparent from the position of the handle. The handle signals the lack of proper engagement by a clearly wrong position or shape. Thus, an additional safety feature is provided by the present invention. Furthermore, the use of the handle does not result in a disengagement; if the handle is grasped by the user and pulled (for example for replacement in the applicator unit). In fact, such pulling at the handle even increases the locking force transmitted to the tip.

Further details of the invention are defined in the features of the claims.

### BRIEF DESCRIPTION OF THE DRAWINGS

Preferred embodiments of the invention are described in more detail below with reference to the attached drawings, which are by way of example only.
- Fig. 1: is a front perspective view of a conventional dispensing cartridge;
- Fig. 2: is a front perspective view of the conventional dispensing cartridge of Fig. 1 with the locking lever in its engaged position;
- Fig. 3: is a cross sectional view of a dispensing cartridge according to one embodiment of the present invention;
- Fig. 4: is a top view of the dispensing cartridge of Fig. 3;
- Fig. 5: is a cross sectional view of the dispensing cartridge of Fig. 3 showing the locking assembly in its open position;
- Fig. 6: is a top view of the dispensing cartridge of Fig. 5;
- Fig. 7: is a front perspective view of the dispensing cartridge according to one embodiment of the present invention with the locking assembly in its open position;
- Fig. 8: is a front perspective view of dispensing cartridge of Fig. 7 with the locking assembly in its engaged position;
- Fig. 9: shows the connection of the first movable member and the second movable member by means of a crank mechanism in its non-activated position;
- Fig. 10: shows the connection of the first movable member and the second movable member by means of a crank mechanism in its activated position;
- Fig. 11: shows the connection of the first movable member and the second movable member by means of a gearwheel mechanism in its non-activated position; and
- Fig. 12: shows the connection of the first movable member and the second movable member by means of a gearwheel mechanism in its activated position.

### DETAILED DESCRIPTION OF PREFERRED EMBODIMENTS

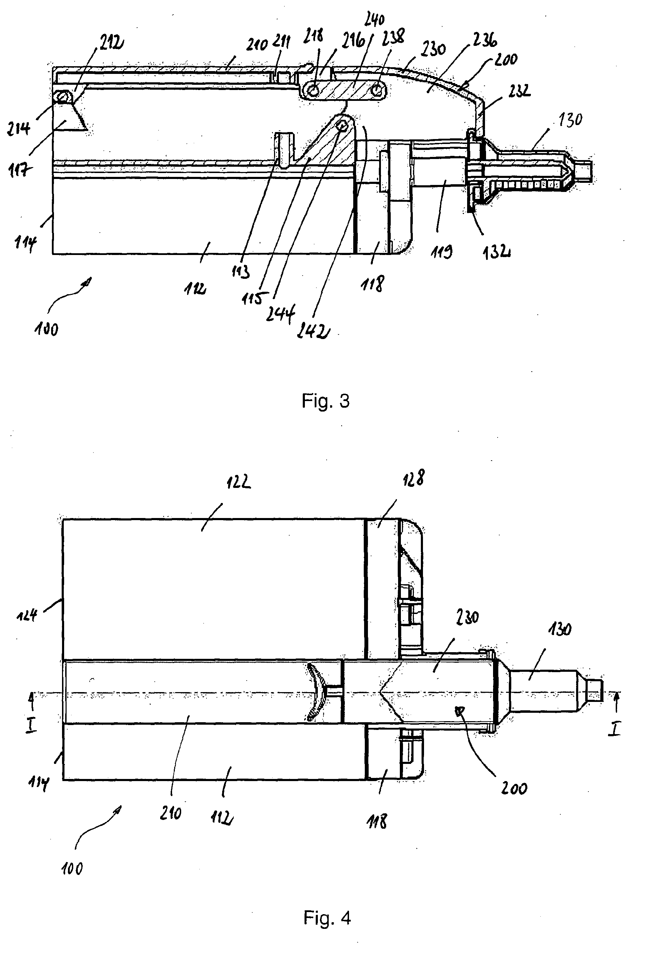

An example of a dispensing cartridge constructed in accordance with the principles of the present invention is illustrated in Figs. 3 to 8 and is broadly designated by reference numeral 100. The cartridge 100 according to this preferred embodiment comprises a first compartment with a body 112.Specifically, the body 112 includes a rear open end 114 and a front outlet opening 116 that is remote from the open end 114. The compartment is elongated and extends from the rear open end 114 to the outlet opening 116.

The dispensing cartridge as shown in the Figures comprises a second compartment having a body 122. The body 122 includes a rear open end 124 and a front outlet opening 126 that is remote from the open end 124. The second compartment is elongated and extends from the open end 124 to the outlet opening 126.

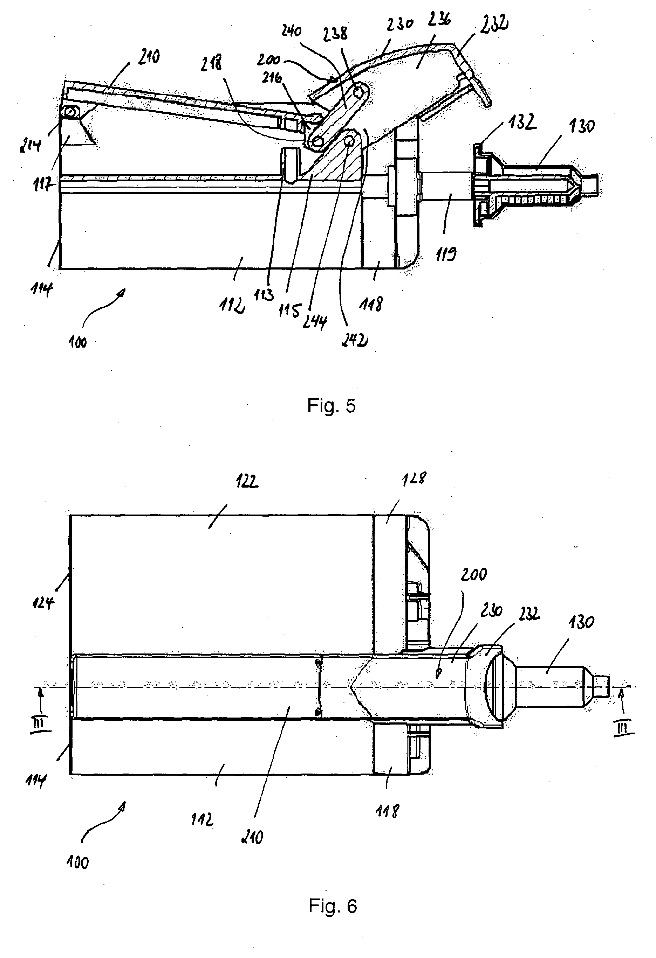

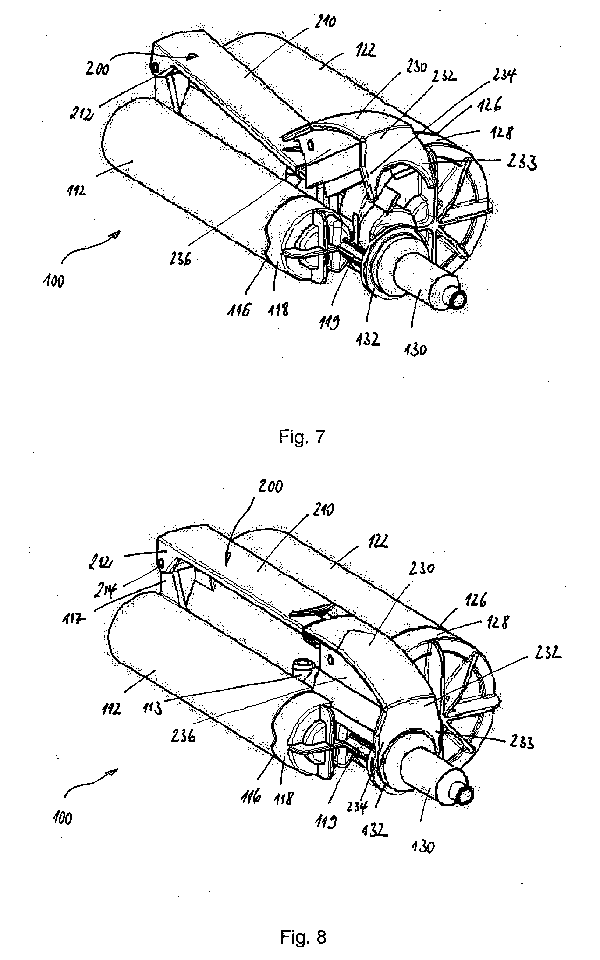

In the shown preferred embodiment, the dispensing cartridge 100 comprises a locking assembly 200. As can be taken from all Figs. 3-8, the locking assembly 200 comprises a first movable or pivotable member 210 in the form of a straight lever arm that is connected at its rear end to the dispensing cartridge 100. Lever arm 210 comprises a flange 212 that is connected to corresponding flange 117 by means of a hinge 214. Due to this connection, lever arm 210 is rotatable about hinge 214 and can be angularly displaced as shown, e.g., in Fig. 5. In particular, lever arm 210 is shown in Fig. 3 in its non-activated position, and is rotatable downwards, i.e. towards the two compartments of the dispensing cartridge 100. Any rotational or pivotal movement from the non-activated position in the opposite direction, i.e. upwards in Fig. 3, is prevented by the other components of the locking assembly 200, as will be clear from the following description of the arrangement and function of the locking assembly 200. In order to allow a defined non-activated position of lever arm 210 as shown for example in Figs 3 and 8, a bias function, for example a bias member like a coil spring may be present. Although such a bias member is not shown in the figures, it is clear from Figs 3 and 5 where it is preferably located. Figs 3 and 5 show an upstanding post 113 that is in line with a corresponding post 211 facing downwards from the lever arm 210. These posts may carry a coil spring. Once lever arm 210 is moved downwards, the (not shown) coil spring urges the lever arm 210 back into its non-activated position. The activated position of lever arm 210 is shown, for example, in Figs. 5 and 7.

The locking assembly further comprises a second movable or pivotable member 230. In the embodiment shown in the figures, the second pivotable member is substantially L-shaped. A second end 232 of the second pivotable member 230 comprises engagement surfaces for a releasable engagement with corresponding engagement surfaces 132, for example, an annular flange, of the mixer 130. The second end 232 of the second pivotable member 230 is preferably U-shaped, as is best seen in Figs. 7 and 8. The two legs 233 and 234 of the U are formed such that they correspond to the annular engagement flange 132 of the mixer 130. In the non-activated position of the locking assembly 200, i.e. in the locking position of the second pivotable member 230 as shown in Fig. 3, the legs 233, 234 of the second end of the second pivotable member engage the engagement flange 132 of mixer 130 which prevents the mixer from being removed from the dispensing cartridge or from being pressed off of the dispensing cartridge due to the pressure applied by the pistons to the containers by the applicator unit. As shown in Figs 3 and 5, the mixer is connected to outlet tubes 119 of the caps 118, 128 of the containers, which are, for example, foil bags containing the material to be dispensed. Thus, in the non-activated position of the locking assembly 200, mixer 130 is automatically and permanently locked to the dispensing cartridge, i.e., to the outlet tubes 119 of the foil bag caps 118, 128.

If the lever arm 210 is pressed into its activated position as shown in Figs 5, 6 and 7, a connecting member 240 transmits the downward movement of lever arm 210 to the second pivotable member 230. Owing to the hinged connection between the connecting member 240 and the first pivotable member and the second pivotable member, and due to the hinged connection between the second pivotable member and the dispensing cartridge, the downward movement of lever arm 210 is translated into an upward pivotal movement of the second pivotable member, and in particular of the second end 232 of the second pivotable member.

The connecting member 240 is connected to the lever arm 210 at the front end (first end) thereof. Lever arm 210 comprises a connecting flange 216, and the connecting member 240 is connected to the connecting flange 216 by means of a hinge 218. A further hinge 238 is provided at the other end of connecting member 240, in order to connect the connecting member 240 with the first end 242 of the second pivotable member 230. As can be seen in Figs 3 and 5, second pivotable member 230 comprises a wall member 236 that is perpendicular to the two legs of the "L" being formed by the second pivotable member 230. Connecting member 240 is connected to this perpendicular wall 236 by means of the hinge 238.

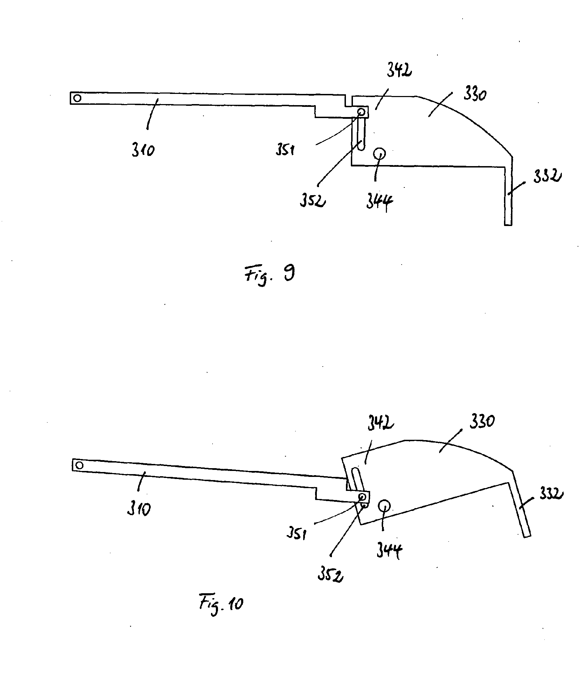

Furthermore, second pivotable member 230 is connected at its first end 242 to a connecting flange 115 by means of a hinge 244. The hinges 218 and 238 are spaced more distant from the longitudinal axis of the mixer 130 than hinge 244. This is shown in Fig. 3. When the lever arm 210 is pressed, hinge 218 moves downwards on a circle. Due to the connection between the first pivotable member and the second pivotable member by the connecting member 240, this downward movement of the front end of lever arm 210 causes a rotational movement of the second pivotable member about the pivot hinge 244. This is shown in Fig. 5. Thus, a small movement of the lever arm 210 results in a movement of the second pivotable member in order to facilitate an easy release of the mixer 130. Dependent on the length of the lever arm relative to the L-shaped member, a small displacement of the lever arm results in a much larger displacement of the L-shaped member. In fact, with the arrangement as shown in Figs. 3 and 5, for example, a knee joint is formed. However, instead of such a knee joint, it is encompassed by the present invention that a crank mechanism or a gear wheel mechanism is used in alternative. These alternatives are described below with reference to Figs. 9 to 12.

The locking assembly and the dispensing cartridge according to the present invention provide substantial advantages over conventional dispensing cartridges. Only small movements/displacements are sufficient to allow a replacement of the mixer. Furthermore, an additional safety feature is provided by the locking assembly and the dispensing cartridge of the present invention because in the non-activated position, i.e., the unbiased position of the locking assembly, the mixer is locked to the dispensing cartridge. This prevents unintentional disengagement and accidental removal of the mixer. If the user releases the handle formed by lever arm 210, the biasing member immediately returns the lever arm 210 to its non-activated position, thus again locking the mixer to the dispensing cartridge. Release of the mixer requires the user to overcome the bias force, and to displace the lever arm towards the cartridge. Even more, in case the mixer is not properly attached to the outlet tubes of the caps of the foil bags, the non-engagement of the two legs of the second end of the second pivotable member with the corresponding flanges of the mixer is immediately apparent from the locking assembly which is then not in its non-activated position.

Finally, since lever arm 210 can be spaced from the compartments at a sufficient distance to form a handle for the user, the present invention combines the locking function with the handling function. If the user grasps the handle to remove the dispensing cartridge from the applicator unit, the forces applied by the user to the lever arm 210 are directed away from the dispensing cartridge and are thus added to the forces provided by the biasing member. This ensures that even during removal of the dispensing cartridge from the applicator unit an accidental disengagement of the mixer is prevented.

The tip 130 placed onto the dispensing cartridge 100 as shown, for example, in Fig. 8 is replaced by a new tip as follows. It is assumed for the following description that the dispensing cartridge 100 is contained in an applicator unit (not shown), for example, at a dental practitioner. In order to prepare a new dental impression it might be necessary to change the tip 130 because the material contained in the tip 130 could have been hardened since the last portion has been dispensed. In order to remove the dispensing cartridge 100 from the applicator unit, the dental practitioner grasps the handle of the dispensing cartridge, i.e., the lever arm 210, and takes the entire dispensing cartridge 100 out of the applicator unit, i.e., lifts the cartridge 100. During this operation, the locking function provided by the locking assembly 200 is not impaired because the user pulls on the handle which keeps the locking assembly 200 in its non-activated position. In the next step, the user can hold the entire cartridge 100, and in particular the smaller compartment 112 for example with his right hand with the tip facing away from the body of the user. The user can then press the first end of the lever arm 210 with his thumb to activate the locking assembly 200. In doing this, the locking assembly is displaced from its non-activated position to its activated position, which is shown, e.g., in Fig. 7. The second end of the second pivotable member 230 is lifted as shown in Fig. 7 and releases the tip . The user can now easily remove the used tip 130 with his left hand, and place a new tip 130 onto the outlet tubes 119 of the caps 118, 128. Finally, the user releases the lever arm 210, and the bias spring causes the lever arm to move back to the non-activated position in which the new tip 130 is locked onto the dispensing cartridge 100, as shown again in Fig. 8. For the case that the user did not place the tip 130 properly onto the outlet tubes 119, the engagement arms 233, 234 of the second end 232 of the second pivotable member 230 cannot engage the corresponding flange 132 of the mixer 130, and the locking assembly 200 does not spring back to its non-activated position which can immediately be recognized by the user. The locking assembly 200 is then blocked in an unusual position.

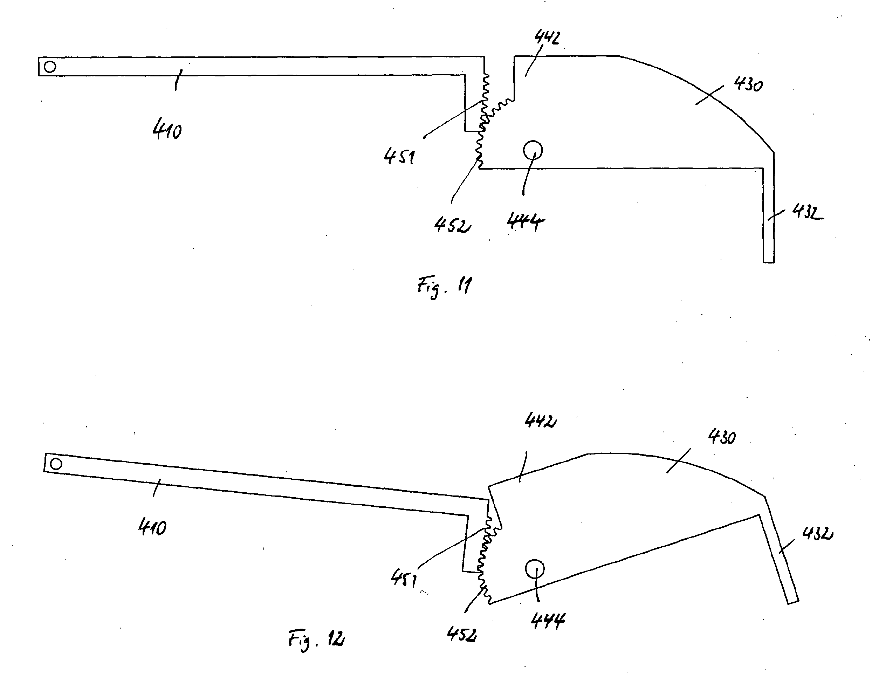

Figs 9 to 12 show two alternative embodiments for providing an operational connection between the first movable member and the second movable member. Instead of a connecting member as described above with reference to Figs. 3 and 5, a crank mechanism is provided (Figs. 9 and 10) or a gearwheel mechanism (Figs 11 and 12).

As shown in Fig. 9, the crank mechanism is formed by a pin 351 at the first end of the lever arm 310 that engages a corresponding slot 352 at the first end 342 of the second pivotable member 330. Fig. 9 shows the locking assembly in its non-activated condition. Upon activation of the locking assembly in order to lift the first end 332 of the second pivotable member 330, pin 351 is moved downwards along slot 352. However, due to the pivotal movement of the lever arm 310, pin 351 in fact runs on a circle (and not vertical in Fig. 9). Since the second pivotable member 330 comprises a pivot 344 that is offset from the axis of the slot, the movement of the pin causes a pivotal or rotational movement of the second pivotable member about pivot 344. This is clearly shown in Fig. 10.

In the alternative shown in Figs. 11 and 12, the lever arm 410 comprises at its first end a first part of a gear mechanism, i.e., a toothed area 451. The teeth of the lever arm 410 are engageable with corresponding teeth of a second part 452 of the gear mechanism that is provided at the second end 442 of the second pivotable member 430. Activation of the non-activated locking assembly (Fig. 11) causes the second pivotable member 430 to rotate about pivot 444 in order to lift the second end 432 (Fig. 12).

The present invention has now been described with reference to several embodiments thereof. It will be apparent to those skilled in the art that many changes can be made in the embodiments described without departing from the scope of the present invention. Thus the scope of the present invention should not be limited to the structures described in this application, but only by structures described by the language of the claims and the equivalents of those structures.

### LIST OF REFERENCE SIGNS

- 1: Cartridge
- 2, 3: Parallel cylindrical compartments
- 4, 5: Caps of foil bags
- 6: Outlet tube
- 7: Mixing tip
- 8: Lever
- 9: U-shaped locking member
- 10: Engagement mechanism
- 11: Release slide for engagement mechanism 10
- 12: Leaf spring
- 13: Lever hinge
- 14: Handle

- 100: Dispensing cartridge
- 112: Body of first compartment
- 113: Post
- 114: Rear open end of 112
- 115: Connecting flange
- 116: Front outlet of 112 (fig 7-8)
- 117: Flange
- 119: Outlet tubes (fig 3,5,7,8)
- 118: Cap of foil bag in 112
- 122: Body of second compartment
- 124: Open end of 122
- 126: Outlet opening of 122
- 128: Cap of foil bag in 122
- 130: Tip
- 132: Annular engagement flange of tip 130

- 200: Locking assembly
- 210: First movable member
- 211: Post
- 212: Flange
- 214: Hinge
- 216: Connecting flange
- 218: Hinge
- 230: Second movable member
- 232: Second end of 230
- 233, 234: Legs of 232
- 236: Wall member
- 238: Hinge
- 240: Connecting member
- 242: First end of 230
- 244: Pivot Hinge

- 310: Lever arm
- 330: Second pivotable member
- 332: Second end of second pivotable member 330
- 342: First end of second pivotable member 330
- 344: Pivot
- 351: Pin
- 352: Slot

- 410: Lever arm
- 430: Second pivotable member
- 432: First end of second pivotable member 430
- 442: Second end of second pivotable member 430
- 444: Pivot
- 451: First part of a gear mechanism
- 452: Second part of a gear mechanism

## Claims

1. Locking assembly (200) for locking a tip (130) to a dispensing cartridge (100), particularly for dental impression materials, said locking assembly (200) comprising:
- a first movable member (210) comprising a first end;
- a second movable member (230) comprising a first end and a second end, said second end of said second movable member (230) being adapted for releasable locking engagement with said tip (130);
- said first movable member (210) and said second movable member (230) being operationally connected such that a movement of the first end of said first movable member (210) is transmitted to said first end of said second movable member (230) causing said second movable member (230) to also move;
wherein movement of said first end of said first movable member (210) in a first direction causes the second end of said second movable member (230) to release said tip (130), and wherein movement of said first end of said first movable member (210) in a second direction causes the second end of said second movable member (230) to engage said tip (130).

2. The locking assembly (200) of claim 1 being removably attachable to a dispensing cartridge (100), particularly for dental impression materials.

3. Dispensing cartridge (100), particularly for dental impression materials, said dispensing cartridge (100) comprising:
- at least one compartment (112, 122) ; and
- a locking assembly (200) for releasably locking a tip (130) with at least one of said compartments;
said locking assembly (200) comprising:
- a first movable member (210) comprising a first end;
- a second movable member (230) comprising a first end and a second end, said second end of said second movable member (230) being adapted for releasable and locking engagement with said tip (130);
said first movable member (210) and said second movable member (230) being operationally connected with one another such that a movement of the first end of said first movable member (210) is transmitted to said first end of said second movable member (230) causing said second movable member (230) to also move;
wherein movement of said first end of said first movable member (210)in a first direction causes the second end of said second movable member (230) to release said tip (130), and wherein movement of said first end of said first movable member (210) in a second direction causes the second end of said second movable member (230) to engage said tip (130).

4. The dispensing cartridge (100) of claim 3, wherein said locking assembly (200) is removably attached to said dispensing cartridge (100).

5. The dispensing cartridge (100) of claim 3 or 4, wherein said first movable member (210) is a first pivotable member.

6. The dispensing cartridge (100) of claim 3, 4 or 5, wherein said second movable member (230) is a second pivotable member.

7. The dispensing cartridge (100) of any of claims 3 to 6, wherein said first movable member (210) is pivotably connected at its second end to said dispensing cartridge (100) adjacent the rear end thereof.

8. The dispensing cartridge (100) of any of claims 3 to 7, wherein said first movable member (210) comprises a lever arm (210) that in the non-activated position of said locking assembly (200) extends along the longitudinal axis of said dispensing cartridge (100) .

9. The dispensing cartridge (100) of any of claims 3 to 8, wherein said second movable member (230) is pivotably connected at its first end to said dispensing cartridge (100) adjacent to the front end thereof.

10. The dispensing cartridge (100) of any of claims 3 to 9, wherein said operational connection is formed by a knee joint.

11. The dispensing cartridge (100) of claim 10, wherein said operational connection is formed by a connecting rod hingedly connected to said first end of said first movable member (210) and hingedly connected to said first end of said second movable member (230).

12. The dispensing cartridge (100) of claim 11, wherein, in the non-activated condition, said hinged connections between said connecting rod and said first and second movable members (210, 230) are more distant from the central tip axis than said pivot of said first end of said second movable member (230).

13. The dispensing cartridge (100) of any of claims 3 to 9, wherein said operational connection is formed by a crank mechanism.

14. The dispensing cartridge (100) of any of claims 3 to 13, wherein said locking assembly (200) is self-locking.

15. The dispensing cartridge (100) of any of claims 3 to 9, wherein said operational connection is formed by a gearwheel mechanism.

16. The dispensing cartridge (100) of any of claims 3 to 15, being biased for biasing said first movable member (210) to its non-activated position.

17. The dispensing cartridge (100) of claim 16, wherein said bias is provided by a coil spring or a leaf spring.

18. The dispensing cartridge (100) of claim 16 or 17, wherein pivotal movement of said first end of said first movable member (210) against said bias causes the second end of said second movable member (230) to release said tip (130), and wherein pivotal movement of said first end of said first movable member (210) with said bias causes the second end of said second movable member (230) to engage said tip (130).

19. The dispensing cartridge (100) of any of claims 3 to 18, said second end of said second movable member (230) comprises engagement surfaces engageable with a complementary engagement surface at said tip (130).

20. The dispensing cartridge (100) of claim 19, wherein said second end of said second movable member (230) is substantially U-shaped, the two legs of said U being engageable with a corresponding flange (132) at the rear end of said tip (130).

21. The dispensing cartridge (100) of claim 20, said U-shaped second end (232) of said second movable member (230) in its non-activated position being in a plane perpendicular to the longitudinal axis of said tip (130).

22. The dispensing cartridge (100) of any of claims 3 to 21, said second movable member (230) being substantially L-shaped, said legs of said L-shaped second movable member (230) forming said first and second ends, respectively.

23. The dispensing cartridge (100) of any of claims 3 to 22, where at least one of said compartments is adapted for receiving a container.

24. The dispensing cartridge (100) of claim 23, said second movable member (230) comprising at least one engagement element for engaging a cap (118, 128) of said container.

25. The dispensing cartridge (100) of claim 24, wherein said at least one engagement element is arranged at said second movable member (230) such that upon activation of said locking assembly (200) said locking assembly first releases said tip (130) in a first position of said second movable member (230), and upon further activation said locking assembly (200) also releases said cap (118, 128) of said container in a second position of said second movable member (230).

26. The dispensing cartridge (100) of any of claims 23 to 25, said locking assembly (200) being adapted such that the tip (130) is replaceable without removal of said container from said compartment.

27. The dispensing cartridge (100) of any of claims 3 to 26, said at least one compartment comprising a body (112, 122) having an open end (114, 124) for receiving a plunger of an applicator, and having an outlet opening (116, 126), the at least one compartment extending between the respective open ends and outlet openings.

28. The dispensing cartridge (100) of any of claims 3 to 27, wherein said first movable member (210), in its non-activated position, forms at least a part of a handle.

29. The dispensing cartridge (100) of any of claims 3 to 28, comprising a first compartment (112) and a second compartment (122).

30. The dispensing cartridge (100) of claim 29, said first compartment (112) comprising a base material and said second compartment (122) comprising a catalyst material that together form a dental impression material after having been mixed.

31. The dispensing cartridge (100) of claim 30, said dental impression material being a polyether impression material or polysiloxane impression material.

32. The dispensing cartridge (100) of any of claims 3 to 31, said tip (130) being a dispensing tip or a mixing tip.

33. A kit comprising:
- an applicator unit comprising at least one plunger; and
- at least one dispensing cartridge (100) according to any of claims 3 to 32.

34. A kit comprising:
- at least one dispensing cartridge (100) according to any of claims 3 to 33; and
- a tip (130).
